(19) Europäisches Patentamt
European Patent Office
Office européen des brevets

(11) **EP 2 529 476 B1**

(12) **FASCICULE DE BREVET EUROPEEN**

(45) Date de publication et mention
de la délivrance du brevet:
**19.03.2014 Bulletin 2014/12**

(51) Int Cl.:
*H02M 7/493* *(2007.01)*   *H02P 29/02* *(2006.01)*

(21) Numéro de dépôt: **11704255.6**

(86) Numéro de dépôt international:
**PCT/FR2011/050016**

(22) Date de dépôt: **06.01.2011**

(87) Numéro de publication internationale:
**WO 2011/092408 (04.08.2011 Gazette 2011/31)**

(54) **PROCEDE ET DISPOSITIF DE COMMANDE DE MACHINE ELECTRIQUE POLYPHASEE**

VERFAHREN UND VORRICHTUNG ZUR STEUERUNG EINER MEHRPHASIGEN ELEKTRISCHEN MASCHINE

METHOD AND DEVICE FOR CONTROLLING A POLYPHASE ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2010 FR 1050582**

(43) Date de publication de la demande:
**05.12.2012 Bulletin 2012/49**

(73) Titulaire: **Hispano Suiza**
**92700 Colombes (FR)**

(72) Inventeur: **DE WERGIFOSSE, Eric**
**F-77515 Saint Augustin (FR)**

(74) Mandataire: **Joly, Jean-Jacques et al**
**Cabinet Beau de Loménie**
**158, rue de l'Université**
**75340 Paris cedex 07 (FR)**

(56) Documents cités:
**US-A1- 2008 130 182**

• **WELCHKO B A ET AL: "Fault tolerant three-phase AC motor drive topologies; A comparison of features, cost, and limitations", ELECTRIC MACHINES AND DRIVES CONFERENCE, 2003. IEMDC'03. IEEE INTERNAT IONAL JUNE 1-4, 2003, PISCATAWAY, NJ, USA,IEEE, vol. 1, 1 juin 2003 (2003-06-01), pages 539-546, XP010644859, ISBN: 978-0-7803-7817-9**
• **RIBEIRO R L A ET AL: "Compensation strategies in the PWM-VSI topology for a fault tolerant induction motor drive system", DIAGNOSTICS FOR ELECTRIC MACHINES, POWER ELECTRONICS AND DRIVES, 2003. SDEMPED 2003. 4TH IEEE INTERNATIONAL SYMPOSIUM ON 24-26 AUG., 2003, PISCATAWAY, NJ, USA, IEEE, 24 août 2003 (2003-08-24), pages 211-216, XP010659931, DOI: DOI:10.1109/DEMPED. 2003.1234575 ISBN: 978-0-7803-7838-4**

**Description**

Arrière-plan de l'invention

L'invention concerne la commande de machine électrique polyphasée au moyen de plusieurs onduleurs en parallèle.

L'invention s'applique plus particulièrement dans les cas où une telle commande doit présenter un haut degré de fiabilité, par exemple dans le domaine aéronautique.

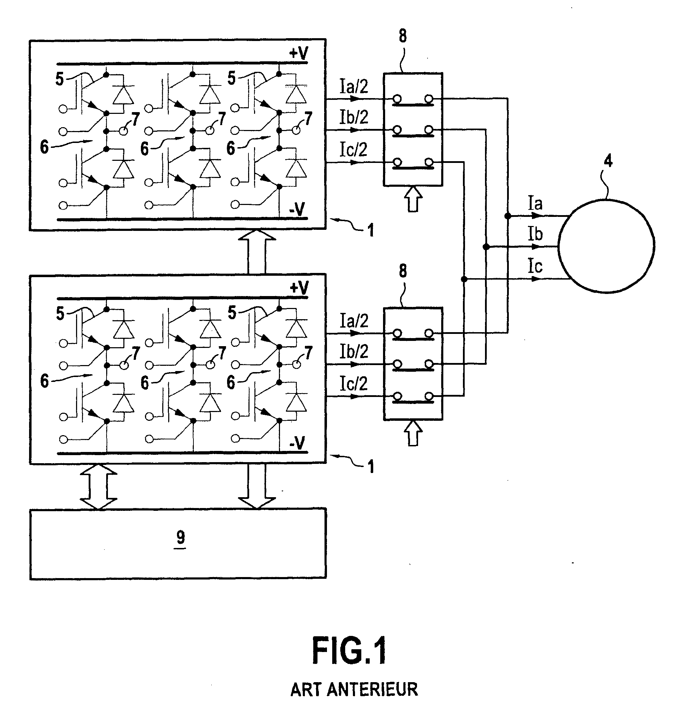

Un dispositif connu pour la commande d'une machine électrique triphasée est représenté sur la figure 1. Ce dispositif comporte deux onduleurs triphasés 1 qui fournissent des courants alternatifs $I_a$, $I_b$, $I_c$ aux enroulements de phases de la machine électrique 4, chaque onduleur fournissant sensiblement la moitié des courants de phase. Chaque onduleur comprend des interrupteurs 5 montés en pont, par exemple des transistors de puissance. Chaque onduleur est formé de trois branches 6 comportant chacune deux interrupteurs de puissance 5 montés en série entre deux bornes opposées +V et -V d'une alimentation électrique continue et de part et d'autre d'un point 7 relié à une phase respective de la machine électrique. Un commutateur d'isolement tripolaire 8 est monté entre chaque onduleur et la machine électrique. Un circuit 9 commande la commutation des interrupteurs de puissance 5 via des circuits d'attaque pour moduler la source électrique continue afin de produire les courants alternatifs $I_a$, $I_b$, $I_c$. On utilise typiquement une modulation de largeur d'impulsions (MLI ou PWM pour "Pulse Width Modulation").

En cas de défaut d'une branche d'onduleur, l'onduleur en défaut est isolé par ouverture de commutateur d'isolement associé et les courants de phase doivent alors être fournis intégralement par l'autre onduleur. Chaque branche de cet autre onduleur est alors parcourue par l'intégralité du courant de phase et non plus par la moitié de celui-ci. Les interrupteurs de puissance doivent donc être prévus pour pouvoir commuter sous un courant ayant une amplitude double de celle du courant qu'ils conduisent normalement (hors défaut).

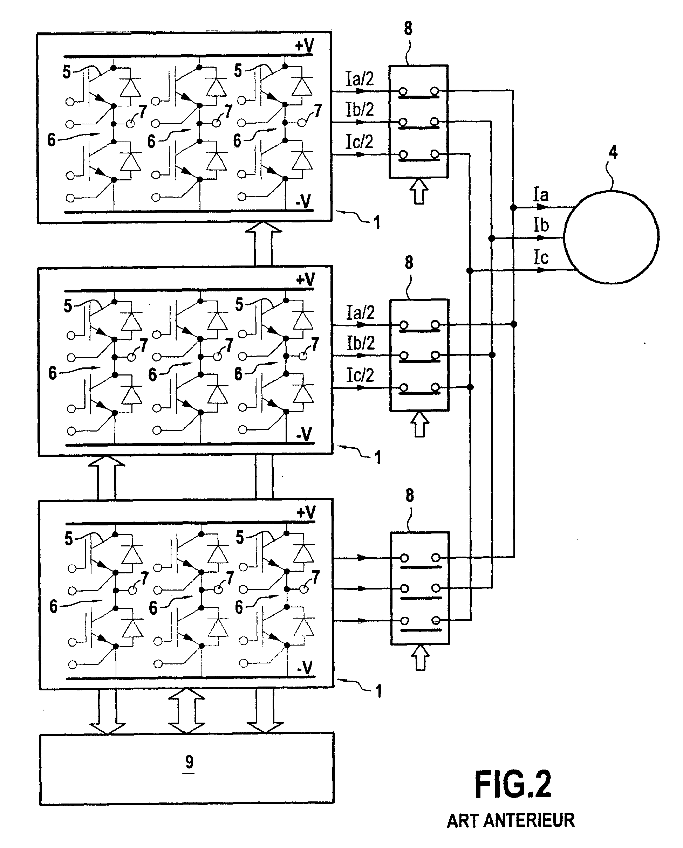

Un autre mode de réalisation d'un dispositif connu de commande d'une machine électrique triphasée est représenté sur la figure 2. Cet autre mode de réalisation se distingue de celui de la figure 1 par la présence d'un onduleur supplémentaire avec son commutateur d'isolement associé. En fonctionnement normal, deux onduleurs sont en service fournissant chacun les moitiés des courants de phase, le troisième onduleur étant isolé. En cas de défaut d'une branche d'onduleur, l'onduleur en défaut est isolé par ouverture du commutateur d'isolement associé et l'onduleur supplémentaire est mis en service avec fermeture du commutateur d'isolement associé.

Dans l'un et l'autre cas ci-dessus, un surdimensionnement important est requis soit en capacité de commutation des interrupteurs de puissance, soit en nombre d'onduleurs.

Objet et résumé de l'invention

L'invention a pour but de permettre à une machine électrique polyphasée d'être commandée par plusieurs onduleurs en parallèle avec un haut degré de fiabilité sans requérir un tel surdimensionnement.

Selon un aspect de l'invention, ce but est atteint grâce à un procédé de commande de machine électrique polyphasée au moyen d'au moins deux onduleurs polyphasés en parallèle, chaque onduleur comprenant des branches en nombre égal à celui des phases de la machine électrique et chaque branche comportant deux interrupteurs de puissance connectés en série entre deux bornes opposées d'une alimentation électrique continue et de part et d'autre d'un point relié à une phase électrique de la machine électrique,

le procédé comprenant la commande des onduleurs par modulation de largeur d'impulsions commandant la commutation des interrupteurs de puissance, et la détection de défaut de branche d'onduleur,

procédé selon lequel, en réponse à la détection d'une branche d'onduleur en défaut, la branche en défaut est isolée, la phase de la machine électrique correspondant à la branche en défaut est alimentée par la ou chaque autre branche d'onduleur correspondante, et la commande par modulation de largeur d'impulsions est modifiée notamment pour rendre conducteurs successivement et sans commutation les interrupteurs de puissance de la ou chaque autre branche d'onduleur correspondante lorsque, en valeur absolue, l'intensité du courant de phase concernée est supérieure ou égale à un seuil compris entre 80 % et 120 % de $\dfrac{n-1}{n} \ I_{max}$ où n est le nombre

d'onduleurs et $I_{max}$ est l'intensité maximale du courant de phase en valeur absolue, tout en conservant une génération de tension sensiblement sinusoïdale sur chaque phase de la machine.

Ainsi, dans la ou chaque branche d'onduleur qui reprend la fraction de courant de phase assurée précédemment par la branche en défaut, il n'est pas imposé de commutation des interrupteurs de puissance lorsque le courant parcourant la ou chaque branche a une amplitude supérieure à un seuil sensiblement égal (à 20 % près) à la valeur maximale du courant en l'absence de défaut. Bien entendu, pour les autres branches d'onduleur en service, une modification de la MLI est aussi requise en comparaison avec celle appliquée avant détection du défaut, afin de continuer à délivrer des courants de phase alternatifs équilibrés.

Le procédé selon l'invention est donc remarquable en ce qu'il peut être pallié au défaut d'une branche d'onduleur sans surdimensionnement des interrupteurs de puissance afin qu'ils puissent commuter sous des courants d'amplitude plus élevée que lors d'un fonctionnement normal et sans nécessiter de redondance au niveau du nombre d'onduleurs.

De préférence, dans le cas de la commande d'une machine électrique triphasée au moyen de deux onduleurs en parallèle, pendant chaque période du courant de phase correspondant à la branche d'onduleur en défaut, les interrupteurs de puissance de l'autre branche d'onduleur correspondante sont rendus conducteurs successivement et sans commutation chacun pendant environ 1/3 de ladite période.

Selon un mode de réalisation, l'isolement de la branche d'onduleur en défaut est réalisé par ouverture d'un commutateur d'isolement de branche connecté entre la branche d'onduleur et la phase correspondante de la machine électrique.

Selon un autre mode de réalisation, l'isolement de la branche d'onduleur en défaut est réalisé par inhibition de circuits d'attaque des interrupteurs de puissance de la branche en défaut.

Selon un autre aspect de l'invention, celle-ci vise aussi un dispositif de commande de machine électrique polyphasée propre à mettre en oeuvre le procédé défini ci-avant.

Ce but est atteint grâce à un dispositif de commande comportant :

- au moins deux onduleurs polyphasés en parallèle, chaque onduleur comprenant des branches en nombre égal à celui de courants de phase à fournir et chaque branche comportant deux interrupteurs de puissance connectés en série entre deux bornes opposées d'une alimentation électrique continue et de part et d'autre d'un point relié à une borne de sortie de courant de phase respective,
- un circuit de commande des onduleurs par modulation de largeur d'impulsions commandant la commutation des interrupteurs de puissance, et
- un système de détection de défaut des branches d'onduleur relié au circuit de commande,

dispositif dans lequel, en réponse à la détection d'une branche d'onduleur en défaut, le circuit de commande des onduleurs est agencé pour :

- isoler la branche d'onduleur en défaut de sorte que le courant de la phase correspondante soit fourni par la ou chaque autre branche d'onduleur correspondante, et
- modifier la modulation de largeur d'impulsions notamment pour rendre conducteur successivement et sans commutation des interrupteurs de puissance de la ou chaque autre branche d'onduleur correspondante lorsque, en valeur absolue, l'intensité du courant de phase concernée est supérieure ou égale à un seuil compris entre 80 % et 120 % de

$$\frac{n-1}{n} I_{max}$$ où n est le nombre d'onduleurs et $I_{max}$

est l'intensité maximale du courant de phase en valeur absolue, tout en conservant une génération de tension sensiblement sinusoïdale sur chaque phase de la machine.

Avantageusement, dans le cas de la commande d'une machine électrique triphasée au moyen de deux onduleurs en parallèle, le circuit de commande est agencé pour, en réponse à la détection d'une branche d'onduleur en défaut, modifier la modulation de largeur d'impulsions notamment pour rendre conducteurs successivement et sans commutation les interrupteurs de puissance de l'autre branche d'onduleur correspondante pendant des durées respectives égales à environ 1/3 de la période du courant de phase.

Selon un mode de réalisation, le dispositif de commande comporte des commutateurs d'isolement connectés respectivement aux branches d'onduleurs pour pouvoir isoler sélectivement une branche d'onduleur par rapport à la sortie de courant de phase correspondante.

Selon un autre mode de réalisation, les interrupteurs de puissance des branches d'onduleur sont commandés via des circuits d'attaque et le circuit de commande d'onduleurs est agencé pour, en réponse à une détection de défaut de branche, inhiber le fonctionnement des circuits d'attaque des interrupteurs de puissance de la branche en défaut.

Selon encore un autre de ses aspects, l'invention vise un système de démarrage de moteur de propulsion aéronautique comprenant une machine électrique polyphasée commandée en mode moteur électrique pour entraîner un arbre du moteur de propulsion et un dispositif tel que défini ci-avant pour commander la machine électrique polyphasée.

Brève description des dessins

D'autres particularités et avantages de l'invention ressortiront à la lecture de la description faite ci-après, à titre indicatif mais non limitatif, en référence aux dessins annexés, sur lesquels :

- les figures 1 et 2, déjà décrites montrent très schématiquement deux modes de réalisation d'un dispositif de commande à haute fiabilité pour une machine électrique polyphasée, selon l'état de la technique antérieure ;
- la figure 3 montre très schématiquement un mode de réalisation d'un dispositif de commande de machine électrique polyphasée selon l'invention,
- la figure 4 est une vue plus détaillée d'une branche d'onduleur du dispositif de la figure 3 ;
- la figure 5 montre la variation du rapport cyclique des impulsions commandant la commutation des interrupteurs de puissance des branches d'onduleur dans le dispositif de la figure 3, en l'absence de défaut ;

- la figure 6 montre le dispositif de commande de la figure 3 après détection d'une branche d'onduleur en défaut ;

- la figure 7 montre la variation du rapport cyclique des impulsions commandant la commutation des interrupteurs des branches d'onduleur actives dans le dispositif de la figure 3 après détection d'une branche d'onduleur en défaut et isolation de celle-ci ;

- la figure 8 montre des étapes successives d'une séquence de détection de défaut de branche d'onduleur et de traitement du défaut ; et

- la figure 9 montre schématiquement un circuit de commande d'onduleurs dans un dispositif de commande selon un mode de réalisation de l'invention, pour la commande d'une machine électrique synchrone avec régulation de couple.

Description détaillée de modes de réalisation de l'invention

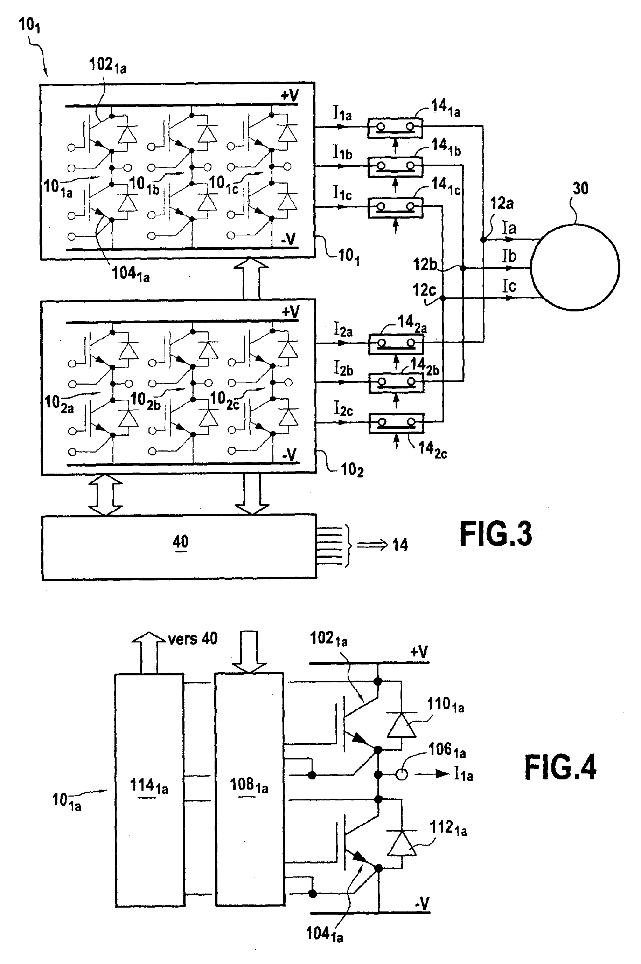

La figure 3 montre schématiquement un mode de réalisation d'un dispositif de commande 10 selon l'invention dans le cas de la commande d'une machine électrique triphasée 30 au moyen de deux onduleurs triphasés $10_1$ et $10_2$ en parallèle.

Comme indiqué plus haut, l'invention s'applique notamment dans le domaine aéronautique. La machine électrique 30 peut être une machine d'un système de démarrage de moteur aéronautique de propulsion, par exemple de turbomoteur. La machine électrique est alors couplée mécaniquement à un arbre du moteur de propulsion pour entraîner celui-ci au démarrage en étant commandée en mode moteur électrique. La machine électrique 30 peut aussi être une machine utilisée pour le démarrage d'un groupe auxiliaire de puissance (APU) ou pour l'activation d'actionneurs.

L'onduleur $10_1$ comprend trois branches $10_{1a}$, $10_{1b}$ et $10_{1c}$ qui délivrent des courants alternatifs $I_{1a}$, $I_{1b}$ et $I_{1c}$ sur des bornes de sortie respectives $12_a$, $12_b$ et $12_c$ du dispositif de commande. De façon similaire, l'onduleur $10_2$ comprend trois branches $10_{2a}$, $10_{2b}$ et $10_{2c}$ qui délivrent des courants alternatifs $I_{2a}$, $I_{2b}$ et $I_{2c}$ sur les bornes de sortie $12_a$, $12_b$ et $12_c$, respectivement. Les courants de phase $I_a$, $I_b$ et $I_c$ fournis à des enroulements statoriques de la machine électrique 30 sont tels que $I_a = I_{1a} + I_{2a}$, $I_b = I_{1b} + I_{2b}$ et $I_c = I_{1c} + I_{2c}$. Les onduleurs $10_1$ et $10_2$ ont des constructions similaires et, en fonctionnement normal, sont commandés de la même façon de sorte que les courants $I_{1a}$ et $I_{2a}$ sont sensiblement en phase et égaux à $I_a/2$. De façon similaire, $I_{1b}$ et $I_{2b}$ sont sensiblement en phase et égaux à $I_b/2$ et $I_{1c}$ et $I_{2c}$ sont sensiblement en phase et égaux à $I_c/2$.

Les branches d'onduleur sont toutes semblables. Chaque branche, par exemple la branche $10_{1a}$ (figures 3 et 4) comprend deux interrupteurs $102_{1a}$ et $104_{1a}$ qui sont connectés en série entre des rails d'alimentation électrique continue +V et -V et de part et d'autre d'un point $106_{1a}$ où le courant $I_{1a}$ est délivré. Les interrupteurs $102_{1a}$ et $104_{1a}$ sont typiquement des interrupteurs électroniques formés par des transistors de puissance, par exemple des transistors bipolaires à grille isolée ou IGBT ("Insulated Gate Bipolar Transistor"). D'autres types d'interrupteurs de puissance pourraient être utilisés par exemple des transistors de type MOSFET, COOLMOS, JFET ou des thyristors. La source d'alimentation continue est modulée par commutation des transistors de puissance $102_{1a}$ et $104_{1a}$ pour obtenir un courant $I_{1a}$ alternatif d'allure sensiblement sinusoïdale. On utilise typiquement une MLI. Les impulsions de commutation sont appliquées entre grille et émetteur des transistors $102_{1a}$ et $104_{1a}$ au moyen d'un circuit d'attaque (ou "driver") $108_{1a}$ pour commander des commutations successives des transistors, l'un étant conducteur pendant que l'autre est bloqué. Des diodes de roue libre $110_{1a}$ et $112_{1a}$ sont branchées entre collecteur et émetteur des transistors $102_{1a}$ et $104_{1a}$ afin de permettre le fonctionnement de la branche de pont dans les 4 quadrants définis par les axes tension de sortie et courant de sortie.

Un circuit de détection de désaturation $114_{1a}$ est relié aux transistors de puissance $102_{1a}$, $104_{1a}$ pour recueillir une information représentative de la tension entre collecteur et émetteur lorsque les transistors sont commandés à l'état conducteur. Lorsque cette information traduit la présence d'une tension collecteur-émetteur supérieure à un seuil maximum, un signal de défaut du transistor de branche d'onduleur est émis par le circuit $114_{1a}$.

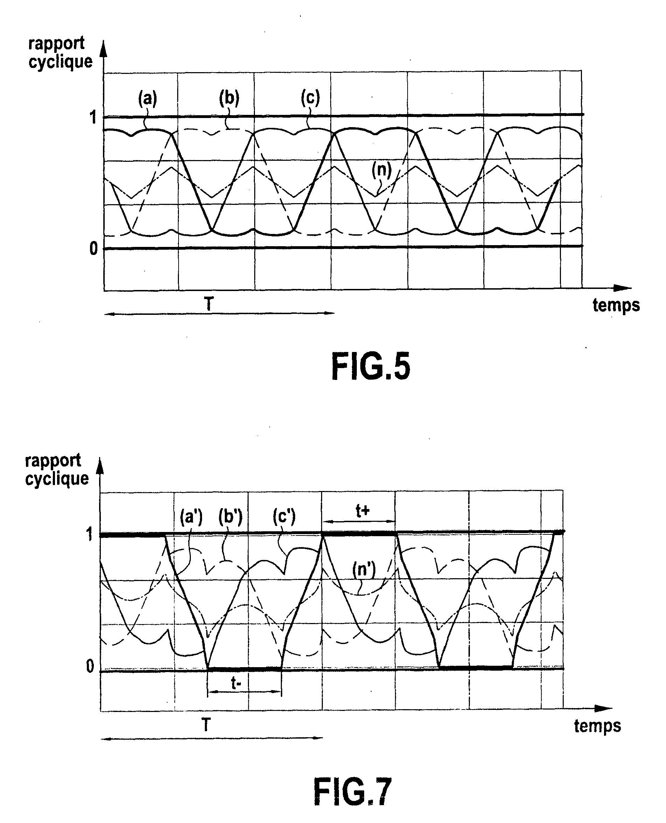

Les circuits $108_{1a}$ et $114_{1a}$ sont reliés à un circuit 40 de commande d'onduleurs qui comprend un générateur d'impulsions pour réaliser une MLI par exemple de type vectoriel. A titre d'exemple, la courbe (a) de la figure 5 représente la variation du rapport cyclique des impulsions de commutation correspondant à une phase A sur des périodes électriques du courant de cette phase, c'est-à-dire la variation du rapport cyclique des impulsions appliquées à l'un des transistors de puissance des branches $10_{1a}$ et $10_{2a}$, le rapport cyclique des impulsions qui commandent la commutation de l'autre transistor de puissance des mêmes branches étant complémentaire. La durée T représente la période électrique des courants fournis par les onduleurs. Les courbes (b) et (c) représentent les variations des rapports cycliques des impulsions de commutation correspondant aux autres phases B et C de la machine électrique tandis que la courbe (n) montre le rapport cyclique correspondant au point neutre de la machine électrique. Les courbes (a), (b) et (c) ont même allure de variation mais sont déphasées mutuellement de $2\pi/3$. L'allure des courbes (a), (b) et (c) n'est pas sinusoïdale, la MLI étant choisie pour optimiser l'utilisation du potentiel de la source d'énergie électrique continue. La variation du rapport cyclique au point neutre de la machine électrique (courbe (n)) montre que l'on reconstitue des tensions sensiblement sinusoïdales entre neutre et chaque phase.

Un dispositif de commande de machine électrique triphasée tel que décrit ci-avant est bien connu en soi.

Selon l'invention, en cas de défaut détecté sur une branche d'onduleur, la branche en défaut est sélectivement isolée et la MLI est modifiée pour permettre à la branche correspondant à la même phase dans l'autre onduleur de fournir l'intégralité du courant de la phase concernée mais sans imposer de surdimensionnement lié à la nécessité de commuter des interrupteurs de puissance sous un courant d'amplitude plus élevée qu'en fonctionnement normal.

Aux fins d'isolement sélectif d'une branche d'onduleur en défaut, des contacteurs d'isolement de branche monopolaires $14_{1a}$, $14_{1b}$ et $14_{1c}$ sont insérés entre les branches $10_{1a}$, $10_{1b}$ et $10_{1c}$ et les sorties $12_a$, $12_b$ et $12_c$, respectivement, et des contacteurs monopolaires $14_{2a}$, $14_{2b}$ et $14_{2c}$ sont insérés entre les branches $10_{2a}$, $10_{2b}$ et $10_{2c}$ et les sorties $12_a$, $12_b$ et $12_c$, respectivement, ces différents contacteurs étant commandés sélectivement par le circuit de commande 40.

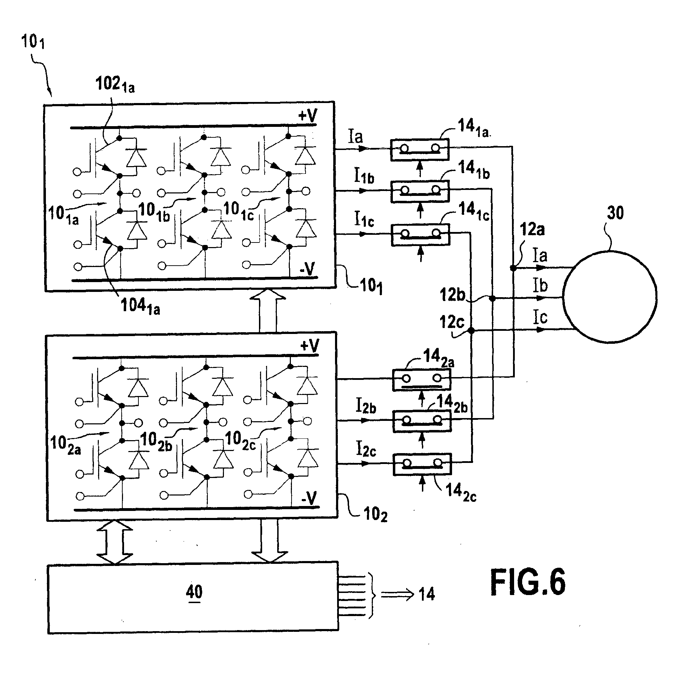

En cas de détection de défaut sur une branche d'onduleur, par exemple la branche $10_{2a}$, le circuit 40 commande l'ouverture du contacteur d'isolement de branche correspondant $14_{2a}$ comme montré sur la figure 6. L'intégralité du courant de phase Ia est alors fourni par la branche $10_{1a}$ tandis que les courants de phase $I_b$ et $I_c$ continuent à être obtenus à partir des contributions respectives $I_{1b}$, $I_{2b}$ et $I_{1c}$, $I_{2c}$ des branches $10_{1b}$, $10_{2b}$ et $10_{1c}$, $10_{2c}$.

La MLI est modifiée de manière que les transistors de puissance de la branche $10_{1a}$ soient maintenus conducteurs sans commutation tant que le courant $I_a$ qui les traverse est en valeur absolue supérieure à un seuil sensiblement égal à $I_{max}/2$ où $I_{max}$ est la valeur absolue maximale du courant de phase. Le seuil pourra par exemple être compris entre 0,8 (Imax/2) et 1,2 ($I_{max}/2$).

La courbe (a') de la figure 7 montre la variation dans le temps du rapport cyclique des impulsions de commutation correspondant à la phase A selon la MLI modifiée après détection de défaut sur une branche d'onduleur correspondant à la phase A. Chaque transistor de puissance de la branche d'onduleur reprenant l'intégralité du courant de la phase A est maintenu conducteur sans commutation pendant une durée correspondant sensiblement au tiers de la période T (ce qui correspond à une valeur du seuil ci-dessus d'environ $I_{max}/2$). Les plages $t_+$ et $t_-$ correspondent par exemple aux durées de conduction sans commutation du transistor de puissance $110_{1a}$ situé du côté du rail d'alimentation +V et de celui $112_{1a}$ situé du côté du rail d'alimentation -V, respectivement. Ainsi, sur une période T, pendant T/3 (plage $t_+$), le transistor $110_{1a}$ est en conduction permanente et le transistor $112_{1a}$ est non conducteur (rapport cyclique égal à 1), pendant la durée T/6 suivante, le rapport cyclique décroît de 1 à 0, pendant T/3 suivant, le transistor $112_{1a}$

est en conduction permanente et le transistor $110_{1a}$ est non conducteur (rapport cyclique égal à 0) et pendant la durée T/6 restante, le rapport cyclique croît de 0 à 1.

Le courant traversant la branche $10_{1a}$, dans l'exemple ci-dessus d'un défaut détecté sur la branche $10_{2a}$, est augmenté, normalement doublé, par rapport au fonctionnement nominal sans défaut. Toutefois, cela ne conduit pas à un doublement de la dissipation car les pertes par commutation diminuent par rapport au fonctionnement nominal. Avec des transistors de puissance de type IGBT, pour lesquels les pertes par conduction sont du même ordre de grandeur que les pertes par commutation, la dissipation totale de chaque transistor de puissance est augmentée dans un rapport d'environ 1,4. L'augmentation correspondante de la température de jonction est acceptable du point de vue de la fiabilité car elle est normalement comprise dans une marge de sécurité de fonctionnement du transistor de puissance et car le fonctionnement en mode de défaut est limité dans le temps au délai d'intervention en maintenance. En outre, du fait de la présence des plages sans commutation, la dissipation des diodes de roue libre de la branche d'onduleur qui reprend l'intégralité du courant de phase est fortement diminuée.

Sur la figure 7, les courbes (b') et (c') représentent la variation des rapports cycliques correspondant aux phases B et C de la machine électrique et la courbe (n') représente la variation du rapport cyclique au neutre de la machine. Les courbes (b') et (c') présentent des allures de variation similaires qui sont modifiées par rapport aux allures de variation des courbes (b) et (c) de la figure 5 afin de pouvoir reconstituer des variations sensiblement sinusoïdales des tensions entre neutre et phases. Ainsi, la modification de la MLI doit concerner non seulement la phase correspondant à la branche d'onduleur en défaut mais aussi les autres phases pour pouvoir conserver ces variations sensiblement sinusoïdales. De préférence, avec la MLI modifiée, aucune impulsion de commutation n'est appliquée à la branche en défaut et la tension de grille des transistors de puissance de cette branche est maintenue à un niveau correspondant à un état de blocage.

Bien entendu, la figure 7 représente un exemple parmi d'autres possibles d'une MLI modifiée après défaut.

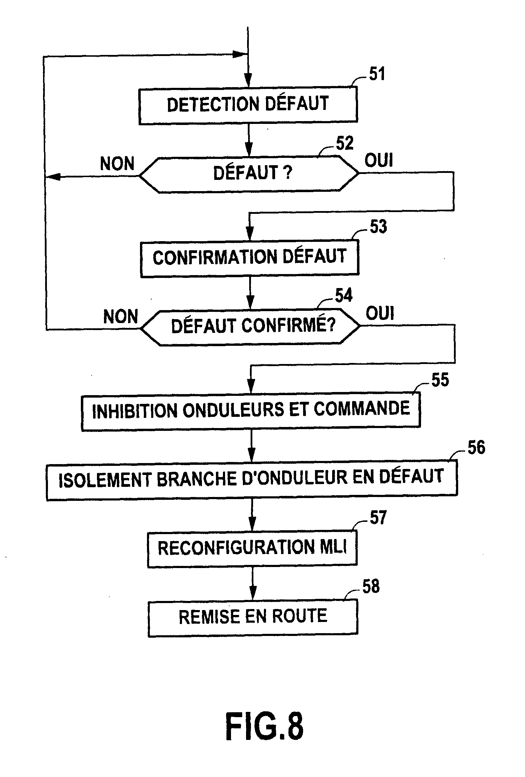

La figure 8 montre des étapes successives d'un exemple d'un processus de détection et de gestion de défaut qui peut être mis en oeuvre par le circuit de commande 40.

L'étape 51 de détection de défaut comporte la surveillance de signaux éventuels émis par les circuits de détection de désaturation associés aux branches d'onduleur, tel que le circuit $114_{1a}$ de la figure 4. En variante, un défaut de branche d'onduleur pourrait être détecté par surveillance du niveau de courant produit par cette branche.

Lorsqu'un défaut est détecté (test 52), celui-ci peut être confirmé (étape 53). La confirmation du défaut peut être obtenue par interruption du fonctionnement des onduleurs puis remise en marche pour constater la persistance éventuelle du défaut. Lorsque les défauts sont détectés par détection de désaturation de transistors de puissance, la mesure du courant produit par la branche d'onduleur suspectée de défaut peut être utilisée à titre de confirmation.

Lorsque le défaut est confirmé (test 54), le fonctionnement des onduleurs et de leur commande est inhibé par exemple par interruption de la MLI (étape 55) et le commutateur d'isolement associé à la branche en défaut est ouvert (étape 56). On notera que la présence de commutateurs d'isolement est préférée pour éviter, en cas de défaut de court-circuit d'un interrupteur de puissance, que ce défaut affecte le fonctionnement du reste du dispositif. Toutefois, la présence de tels commutateurs pourrait être omise si la probabilité d'un tel court-circuit est négligeable au regard de la fiabilité de fonctionnement attendue.

Ensuite, la MLI est reconfigurée et la MLI ainsi modifiée est appliquée par remise en route des branches d'onduleurs autres que celles en défaut (étape 57).

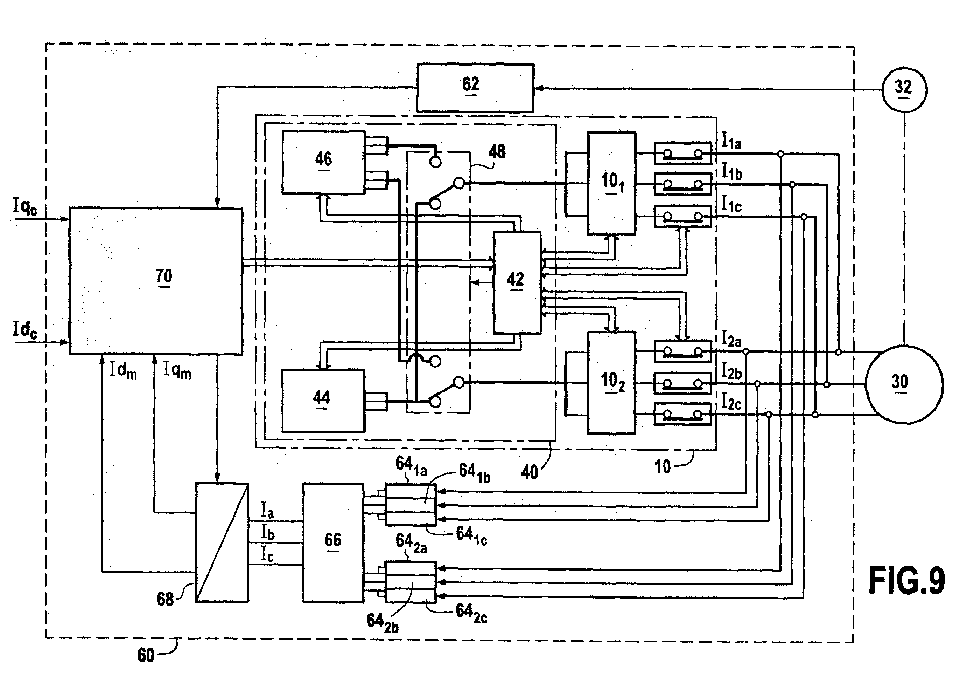

La figure 9 montre un exemple d'implantation du dispositif de commande de la figure 3 dans un régulateur de couple 60 pour la commande d'une machine électrique synchrone 30.

Un circuit 62 est relié à un capteur de position angulaire 32 associé à un arbre de la machine électrique 30 ou à un arbre solidaire en rotation de celle-ci pour fournir des informations représentatives de la vitesse de rotation et de la position angulaire du rotor de la machine électrique 30.

Des circuits $64_{1a}$, $64_{1b}$ et $64_{1c}$ sont connectés à des capteurs de courant montés sur les lignes de sortie des branches de l'onduleur $10_1$ pour fournir des informations représentatives des courants $I_{1a}$, $I_{1b}$ et $I_{1c}$. De même, des circuits $64_{2a}$, $64_{2b}$ et $64_{2c}$ sont connectés à des capteurs de courant montés sur les lignes de sortie des branches de l'onduleur $10_2$ pour fournir des informations représentatives des courants $I_{2a}$, $I_{2b}$ et $I_{2c}$. Des circuits sommateurs 66 fournissent des informations représentatives des courants de phase $I_a$, $I_b$ et $I_c$. Ces informations sont reçues par un circuit de calcul 68 qui élabore, à partir des valeurs des courants de phase, des informations $Iq_m$ et $Id_m$ représentant le courant de couple mesuré et le courant de flux mesuré de la machine électrique.

Un circuit régulateur 70 fournit au circuit de commande d'onduleurs 40 des informations de niveaux de tension et d'angle pour chaque phase de la machine afin d'asservir les valeurs de $Iq_m$ et $Id_m$ à des valeurs de consigne $Iq_c$ (représentant le couple de consigne) et $Id_c$, tout en assurant une position optimale du flux statorique par rapport à la position angulaire du rotor dans la machine électrique 30. A cet effet, le circuit régulateur 70 reçoit les informations $Iq_m$, $Id_m$ fournies par le circuit de calcul 68, les informations de consigne $Iq_c$ et $Id_c$ et les informations de vitesse et de position angulaire fournies par le circuit 62.

Un régulateur de couple tel que décrit ci-avant est bien connu en soi dans son principe.

Les informations de consigne de tensions et de fréquence reçues par le circuit de commande d'onduleurs 40 sont utilisées par une unité de commande numérique 42 pour piloter un ensemble 44 de génération d'impulsions modulées en largeur en l'absence de détection de défaut, ou générateur MLI nominale, les impulsions étant appliquées en parallèle aux branches respectives des onduleurs $10_1$ et $10_2$.

Un basculement de mode MLI entre MLI nominale et MLI modifiée peut être commandé par l'unité de commande numérique 42 pour déconnecter le générateur MLI nominale 44 et mettre en service un générateur MLI modifiée 46, le basculement entre les deux modes MLI étant symbolisé par un commutateur 48. Le générateur MLI modifiée a des sorties associées aux branches des onduleurs $10_1$ et $10_2$. En cas de détection de défaut, le générateur MLI nominale 44 est désactivé, le générateur MLI modifiée 46 est programmé sous la commande de l'unité de commande numérique 42 pour générer sur ses sorties des impulsions modulées en largeur fonction de la branche d'onduleur en défaut et le basculement sur le générateur MLI modifiée 46 est commandé.

Dans ce qui précède, on a envisagé le cas de la commande d'une machine triphasée au moyen de deux onduleurs en parallèle.

Bien entendu, l'invention est applicable à des machines polyphasées ayant un nombre de phases supérieur à trois en adaptant le nombre de branches d'onduleurs.

L'invention est également applicable à la commande de machine polyphasée au moyen de plus de deux onduleurs en parallèle, chaque branche d'onduleur produisant alors sensiblement 1/n du courant de phase correspondante, n étant le nombre d'onduleurs. En cas de défaut d'une branche d'onduleur, le courant de la phase concernée doit alors être repris par les n-1 autres branches correspondantes des autres onduleurs. La MLI est modifiée pour que, dans chacune de ces autres branches, les interrupteurs de puissance soient maintenus conducteurs, sans commutation, tant que l'intensité du courant qui les traverse est, en valeur absolue supérieure à un seuil sensiblement égal à $\dfrac{n-1}{n}\,I_{max}$ où $I_{max}$ est la valeur maximale du courant de phase, en valeur absolue. On pourra choisir un seuil par exemple compris entre 80 % et 120 % de $\dfrac{n-1}{n}\,I_{max}$.

**Revendications**

1. Procédé de commande de machine électrique polyphasée au moyen d'au moins deux onduleurs polyphasés en parallèle, chaque onduleur comprenant des branches en nombre égal à celui des phases de la machine électrique et chaque branche comportant deux interrupteurs de puissance connectés en série entre deux bornes opposées d'une alimentation électrique continue et de part et d'autre d'un point relié à une phase électrique de la machine électrique,

le procédé comprenant la commande des onduleurs par modulation de largeur d'impulsions commandant la commutation des interrupteurs de puissance, et la détection de défaut de branche d'onduleur, **caractérisé en ce que**, en réponse à la détection d'une branche d'onduleur en défaut, la branche en défaut est isolée, la phase de la machine électrique correspondant à la branche en défaut est alimentée par la ou chaque autre branche d'onduleur correspondante, et la commande par modulation de largeur d'impulsions est modifiée notamment pour rendre conducteurs successivement et sans commutation les interrupteurs de puissance de la ou chaque autre branche d'onduleur correspondante lorsque, en valeur absolue, l'intensité du courant de phase concernée est supérieure ou égale à un seuil compris entre 80 % et 120 % de $\dfrac{n-1}{n} \ I_{max}$ où n est le nombre

d'onduleurs et $I_{max}$ est l'intensité maximale du courant de phase en valeur absolue, tout en conservant une génération de tension sensiblement sinusoïdale sur chaque phase de la machine.

2. Procédé selon la revendication 1 pour commander une machine électrique triphasée au moyen de deux onduleurs triphasés en parallèle, **caractérisé en ce que**, pendant chaque période du courant de phase correspondant à la branche d'onduleur en défaut, les interrupteurs de puissance de l'autre branche d'onduleur correspondante sont rendus conducteurs successivement et sans commutation chacun pendant environ 1/3 de ladite période.

3. Procédé selon l'une quelconque des revendications 1 et 2, **caractérisé en ce que** l'isolement de la branche d'onduleur en défaut est réalisé par ouverture d'un commutateur d'isolement de branche connecté entre la branche d'onduleur et la phase correspondante de la machine électrique.

4. Procédé selon l'une quelconque des revendications 1 et 2, **caractérisé en ce que** l'isolement de la branche d'onduleur en défaut est réalisé par inhibition de circuits d'attaque des interrupteurs de puissance de la branche en défaut.

5. Dispositif de commande de machine électrique polyphasée, comportant :

- au moins deux onduleurs polyphasés en parallèle ($10_1, 10_2$), chaque onduleur comprenant des branches en nombre égal à celui de courants de phase à fournir et chaque branche comportant deux interrupteurs de puissance connectés en série entre deux bornes opposées d'une alimentation électrique continue et de part et d'autre d'un point relié à une borne de sortie de courant de phase respective,
- un circuit (40) de commande des onduleurs par modulation de largeur d'impulsions commandant la commutation des interrupteurs de puissance, et
- un système de détection de défaut des branches d'onduleur relié au circuit de commande,

**caractérisé en ce que**, en réponse à la détection d'une branche d'onduleur en défaut, le circuit de commande des onduleurs est agencé pour :

- isoler la branche d'onduleur en défaut de sorte que le courant de la phase correspondant soit fourni par la ou chaque autre branche d'onduleur correspondante, et
- modifier la modulation de largeur d'impulsions notamment pour rendre conducteurs successivement et sans commutation des interrupteurs de puissance de la ou chaque autre branche d'onduleur correspondante lorsque, en valeur absolue, l'intensité du courant de phase concernée est supérieure ou égale à un seuil compris entre 80 % et 120 % de $\dfrac{n-1}{n} \ I_{max}$ où n est le nombre d'onduleurs et $I_{max}$ est l'intensité maximale du courant de phase en valeur absolue, tout en conservant une génération de tension sensiblement sinusoïdale sur chaque phase de la machine.

6. Dispositif selon la revendication 5 pour commander une machine électrique triphasée au moyen de deux onduleurs triphasés ($10_1, 10_2$) en parallèle, **caractérisé en ce que**, en réponse à la détection d'une branche d'onduleur en défaut, le circuit de commande (40) des onduleurs est agencé pour modifier la modulation de largeur d'impulsions notamment pour rendre conducteurs successivement et sans commutation les interrupteurs de puissance de l'autre branche d'onduleur correspondante pendant des durées respectives égales à environ 1/3 de la période du courant de phase.

7. Dispositif selon l'une quelconque des revendications 5 et 6, **caractérisé en ce qu'**il comporte des commutateurs d'isolement (14) connectés respectivement aux branches d'onduleurs pour pouvoir isoler sélectivement une branche d'onduleur par rapport à la sortie de courant de phase correspondante.

8. Dispositif selon l'une quelconque des revendications 5 et 6, **caractérisé en ce que** les interrupteurs de puissance des branches d'onduleur sont commandés via des circuits d'attaque et le circuit (40) de commande d'onduleurs est agencé pour, en réponse à une détection de défaut de branche, inhiber le fonctionnement des circuits d'attaque des interrupteurs de puissance de la branche en défaut.

9. Système de démarrage de moteur de propulsion aéronautique comprenant une machine électrique polyphasée (30) commandée en mode moteur pour entraîner un arbre du moteur de propulsion et un dispositif selon l'une quelconque des revendications 5 à 8 pour commander la machine électrique polyphasée.

**Patentansprüche**

1. Verfahren zur Steuerung einer elektrischen Mehrphasenmaschine mit Hilfe von wenigstens zwei parallel geschalteten Mehrphasen-Wechselrichtern, wobei jeder Wechselrichter eine Anzahl von Zweigen umfasst, die gleich derjenigen der Phasen der elektrischen Maschine ist, und wobei jeder Zweig zwei Leistungsschalter umfasst, die zwischen zwei gegenüberliegenden Anschlüssen einer Gleichstromversorgung sowie auf beiden Seiten einer mit einer elektrischen Phase der elektrischen Maschine verbundenen Stelle in Reihe geschaltet sind, wobei das Verfahren die Steuerung der Wechselrichter durch Impulsbreitenmodulation, welche das Umschalten der Leistungsschalter steuert, und die Erfassung eines Ausfalls eines Wechselrichterzweiges umfasst, **dadurch gekennzeichnet, dass** als Reaktion auf die Erfassung eines ausgefallenen Wechselrichterzweiges der ausgefallene Zweig isoliert wird, die Phase der elektrischen Maschine, welche dem ausgefallenen Zweig entspricht, über den oder jeden entsprechenden anderen Wechselrichterzweig versorgt wird und die Steuerung durch Impulsbreitenmodulation insbesondere verändert wird, um die Leistungsschalter des oder jedes entsprechenden anderen Wechselrichterzweiges nacheinander und ohne Umschalten leitend zu machen, wenn die Stärke des Stroms der betroffenen Phase im Absolutwert größer als oder gleich eine(r) Schwelle zwischen 80 % und 120 % von $\frac{n-1}{n} I_{max}$ ist, wobei n die Anzahl an Wechselrichtern und $I_{max}$ die maximale Stärke des Phasenstroms im Absolutwert ist, wobei gleichzeitig eine im Wesentlichen sinusförmige Spannungserzeugung an jeder Phase der Maschine beibehalten wird.

2. Verfahren nach Anspruch 1, zur Steuerung einer elektrischen Dreiphasenmaschine mit Hilfe von zwei parallel geschalteten Dreiphasen-Wechselrichtern, **dadurch gekennzeichnet, dass** während jeder Periode des Stroms der dem ausgefallenen Wechselrichterzweig entsprechenden Phase die Leistungsschalter des entsprechenden anderen Wechselrichterzweiges nacheinander und ohne Umschalten jeweils während etwa 1/3 der Periode leitend gemacht werden.

3. Verfahren nach einem der Ansprüche 1 und 2, **dadurch gekennzeichnet, dass** die Isolierung des ausgefallenen Wechselrichterzweiges durch Öffnen eines Zweigisolierschalters, der zwischen dem Wechselrichterzweig und der entsprechenden Phase der elektrischen Maschine geschaltet ist, vollzogen wird.

4. Verfahren nach einem der Ansprüche 1 und 2, **dadurch gekennzeichnet, dass** die Isolierung des ausgefallenen Wechselrichterzweiges durch Hemmen von Treiberschaltungen der Leistungsschalter des ausgefallenen Zweiges vollzogen wird.

5. Vorrichtung zur Steuerung einer elektrischen Mehrphasenmaschine, umfassend:

- wenigstens zwei parallel geschaltete Mehrphasen-Wechselrichter ($10_1$, $10_2$), wobei jeder Wechselrichter eine Anzahl von Zweigen umfasst, die gleich derjenigen von bereitzustellenden Phasenströmen ist, und wobei jeder Zweig zwei Leistungsschalter umfasst, die zwischen zwei gegenüberliegenden Anschlüssen einer Gleichstromversorgung sowie auf beiden Seiten einer mit einem jeweiligen Phasenstromausgang verbundenen Stelle in Reihe geschaltet sind,
- einen Kreis (40) zur Steuerung der Wechselrichter durch Impulsbreitenmodulation, welche das Umschalten der Leistungsschalter steuert, und
- ein System zur Erfassung eines Ausfalls der Wechselrichterzweige, das mit dem Steuerkreis verbunden ist,

**dadurch gekennzeichnet, dass** als Reaktion auf die Erfassung eines ausgefallenen Wechselrichterzweiges der Steuerkreis der Wechselrichter dazu eingerichtet ist:

- den ausgefallenen Wechselrichterzweig zu isolieren, so dass der Strom der entsprechenden Phase über den oder jeden entsprechenden anderen Wechselrichterzweig geliefert wird, und

- die Impulsbreitenmodulation insbesondere zu verändern, um Leistungsschalter des oder jedes entsprechenden anderen Wechselrichterzweiges nacheinander und ohne Umschalten leitend zu machen, wenn die Stärke des Stroms der betroffenen Phase im Absolutwert größer als oder gleich eine(r) Schwelle zwischen 80 % und 120 % von $\dfrac{n-1}{n} I_{max}$ ist, wobei n die Anzahl an Wechselrichtern und $I_{max}$ die maximale Stärke des Phasenstroms im Absolutwert ist, wobei gleichzeitig eine im Wesentlichen sinusförmige Spannungserzeugung an jeder Phase der Maschine beibehalten wird.

6. Vorrichtung nach Anspruch 5, zur Steuerung einer elektrischen Dreiphasenmaschine mit Hilfe von zwei parallel geschalteten Dreiphasen-Wechselrichtern ($10_1$, $10_2$), **dadurch gekennzeichnet, dass** als Reaktion auf die Erfassung eines ausgefallenen Wechselrichterzweiges der Steuerkreis (40) der Wechselrichter dazu eingerichtet ist, die Impulsbreitenmodulation insbesondere zu verändern, um die Leistungsschalter des entsprechenden anderen Wechselrichterzweiges nacheinander und ohne Umschalten über jeweilige Zeitdauern, die gleich etwa 1/3 der Periode des Phasenstroms sind, leitend zu machen.

7. Vorrichtung nach einem der Ansprüche 5 und 6, **dadurch gekennzeichnet, dass** sie Isolierschalter (14) umfasst, die jeweils an die Wechselrichterzweige angeschlossen sind, um selektiv einen Wechselrichterzweig gegenüber dem entsprechenden Phasenstromausgang isolieren zu können.

8. Vorrichtung nach einem der Ansprüche 5 und 6, **dadurch gekennzeichnet, dass** die Leistungsschalter der Wechselrichterzweige über Treiberschaltungen gesteuert werden und der Kreis (40) zur Steuerung von Wechselrichtern dazu eingerichtet ist, als Reaktion auf eine Erfassung eines Ausfalls eines Zweiges, den Betrieb der Treiberschaltungen der Leistungsschalter des ausgefallenen Zweiges zu hemmen.

9. System zum Starten einer Luftfahrtantriebsmaschine, umfassend eine im Antriebsmodus betriebene elektrische Mehrphasenmaschine (30), um eine Welle der Antriebsmaschine anzutreiben, sowie eine Vorrichtung nach einem der Ansprüche 5 bis 8 zur Steuerung der elektrischen Mehrphasenmaschine.

**Claims**

1. A method of controlling a polyphase electrical machine by means of at least two polyphase inverters in parallel, each inverter comprising a number of branches equal to the number of phases of the electrical machine, and each branch comprising two power switches connected in series between two opposite terminals of a DC electrical power supply and connected to opposite sides of a point that is connected to an electrical phase of the electrical machine,

the method comprising controlling the inverters by pulse-width modulation so as to control the switching of the power switches, and detecting an inverter branch fault,

the method being **characterized in that** in response to detecting an inverter branch that is faulty, the faulty branch is isolated, the phase of the electrical machine corresponding to the faulty branch is powered by the or each other corresponding inverter branch, and the pulse-width modulation control is modified, in particular to make the power switches of the or each other corresponding inverter branch conductive in succession and without switching while the absolute value of the phase current concerned is greater than or equal to a threshold lying in the range 80% to 120% of $\dfrac{n-1}{n} I_{max}$, where $\underline{n}$ is the number of inverters, and $I_{max}$ is the absolute value of the maximum phase current, and while continuing to generate substantially sinusoidal voltage on each phase of the machine.

2. A method according to claim 1, for controlling a three-phase electrical machine by means of two three-phase inverters in parallel, the method being **characterized in that** during each period of the phase current corresponding to the faulty inverter branch, each of the power switches of the corresponding other inverter branch is made conductive in succession and without switching for about 1/3 of said period.

3. A method according to claim 1 or claim 2, **characterized in that** the faulty inverter branch is isolated by opening a branch isolator switch connected between the inverter branch and the corresponding phase of the electrical machine.

4. A method according to claim 1 or claim 2, **characterized in that** the faulty inverter branch is isolated by inhibiting the driver circuits of the power switches of the faulty branch.

5. A device for controlling a polyphase electrical machine, the device comprising:

• at least two polyphase inverters ($10_1$, $10_2$) in parallel, each inverter having a number of branches equal to the number of phase currents to be delivered, and each branch having two power switches connected in series between two opposite terminals of a DC electrical power supply and connected to opposite sides of a point connected to a respective phase current output terminal;
a control circuit (40) for controlling the inverters by pulse-width modulation, controlling the switching of the power switches; and
• a system for detecting faults of the inverter branches and connected to the control circuit;
the device being **characterized in that**, in response to detection of a faulty inverter branch, the control circuit of the inverters is arranged to:

• isolate the faulty inverter branch so that the current of the corresponding phase is delivered by the or each corresponding other inverter branch; and
• modify the pulse-width modulation in particular so as to make the power switches of the or each corresponding other inverter branch conductive in succession and without switching while the absolute value of the phase current in question is greater than or equal to a threshold lying in the range 80% to 120% of $\dfrac{n-1}{n}$ $I_{max}$, where $\underline{n}$ is the number of inverters, and $I_{max}$ is the absolute value of the maximum phase current, and while continuing to generate a substantially sinusoidal voltage on each phase of the machine.

6. A device according to claim 5, for controlling a three-phase electrical machine by means of two three-phase inverters ($10_1$, $10_2$) in parallel, the device being **characterized in that**, in response to detecting a faulty inverter branch, the control circuit (40) of the inverters is arranged to modify the pulse-width modulation, in particular so as to cause the power switches of the corresponding other inverter branch to be conductive in succession and without switching for respective durations equal to about 1/3 of the period of the phase current.

7. A device according to claim 5 or claim 6, **characterized in that** it includes respective isolating switches (14) connected to each of the inverter branches in order to be capable of isolating any inverter branch selectively from the corresponding phase current outlet.

8. A device according to claim 5 or claim 6, **character-**

**ized in that** the power switches of the inverter branches are controlled via driver circuits and the inverter control circuit (40) is arranged to respond to detecting a faulty branch by inhibiting the operation of the driver circuits of the power switches of the faulty branch.

9. A system for starting an aeroengine, the system comprising a polyphase electrical machine (30) controlled to operate in motor mode to drive a shaft of the engine, and a device according to any one of claims 5 to 8 for controlling the polyphase electrical machine.

# FIG.1

ART ANTERIEUR

**FIG.2**

ART ANTERIEUR

**FIG.3**

**FIG.4**

FIG.5

FIG.7

FIG.6

DETECTION DÉFAUT — 51

NON ← DÉFAUT ? — 52 → OUI

CONFIRMATION DÉFAUT — 53

NON ← DÉFAUT CONFIRMÉ? — 54 → OUI

INHIBITION ONDULEURS ET COMMANDE — 55

ISOLEMENT BRANCHE D'ONDULEUR EN DÉFAUT — 56

RECONFIGURATION MLI — 57

REMISE EN ROUTE — 58

# FIG.8

FIG.9

EP 2 529 476 B1